# FASCICULE DE BREVET EUROPEEN

(11) **EP 1 768 831 B1**
(45) Date de publication et mention de la délivrance du brevet: **09.12.2009**
(21) Numéro de dépôt: 05761108.9
(22) Date de dépôt: 13.07.2005
(51) Int. Cl.: B29C 49/56

(54) **MACHINE DE SOUFFLAGE POUR LE MOULAGE DE RECIPIENTS COMPORTANT UN FOND DE MOULE QUI EST SOLLICITE VERS LE HAUT**
BLASFORMMASCHINE ZUM FORMEN VON BEHÄLTERN MIT EINER NACH OBEN VORBELASTETEN FORMBASIS
BLOW MOULDING MACHINE FOR THE MOULDING OF CONTAINERS, COMPRISING A MOULD BASE WHICH IS BIASED UPWARDS

(30) Priorité: 20.07.2004 FR 0451588
(43) Date de publication de la demande: 04.04.2007
(73) Titulaire: Sidel Participations, 76930 Octeville Sur Mer (FR)
(72) Inventeur: LEGALLAIS, Stéphane, F-76930 Octeville Sur Mer (FR); BLANCHARD, José, F-76930 Octeville Sur Mer (FR)
(74) Mandataire: Kohn, Philippe
(86) Numéro de dépôt international: PCT/EP2005/053342
(87) Numéro de publication internationale: WO 2006/010706

(56) Documents cités:
- DE-A1- 10 212 896
- FR-A- 2 841 495
- FR-A- 2 843 714

## Description

La présente invention concerne une machine de soufflage pour la fabrication de récipients, selon la revendication 1.

La présente invention concerne plus particulièrement une machine de soufflage pour la fabrication de récipients à partir de préformes en matériau thermoplastique par soufflage ou étirage-soufflage, comportant au moins un support qui est monté à rotation autour d'un axe sensiblement vertical et qui porte au moins une console, du type dans lequel la console supporte deux demi-moules qui sont prévus pour former le corps du récipient et un fond de moule qui est prévu pour former le fond du récipient, du type dans lequel les deux demi-moules sont montés mobiles l'un par rapport à l'autre entre une position fermée apte au moulage et une position ouverte apte au démoulage et au chargement d'une préforme, du type dans lequel le fond de moule est entraîné en coulissement par rapport à la console, suivant une direction de coulissement sensiblement parallèle à l'axe de rotation, par un système à came, entre une position haute apte au moulage et une position basse apte au démoulage, et du type dans lequel le fond de moule est prévu pour être emboîté dans les demi-moules lorsqu'il occupe sa position haute et que les demi-moules occupent leur position fermée et du type dans lequel un organe de rappel sollicite le fond de moule vers sa position haute. Une telle machine est montrée dans le brevet français FR-A-2,841,495.

Pour le moulage par soufflage ou étirage-soufflage de récipients tels que des bouteilles à partir de préformes chauffées en matière thermoplastique telle que le polyéthylène téréphtalate (PET), il est connu d'utiliser des moules constitués de deux demi-moules mobiles l'un par rapport à l'autre.

Les demi-moules sont mobiles entre une position ouverte qui correspond à une opération de chargement du moule avec une préforme ou à une opération de déchargement du moule en retirant la bouteille obtenue par l'opération de moulage, et une position fermée qui correspond à une opération de moulage.

Il est connu d'agencer les deux demi-moules de manière qu'ils soient rotatifs l'un par rapport à l'autre, ce qui correspond à des moules du type portefeuille. Un tel type de moule est décrit notamment dans le document FR-A-2.653.058.

La constitution du moule en seulement deux demi-moules est possible lorsque le récipient à fabriquer possède une forme relativement simple et est facilement extractible du moule. C'est le cas notamment lorsque le fond du récipient ne présente pas de reliefs prononcés, par exemple lorsqu'il comporte un fond hémisphérique convexe ou un fond plat.

L'actionnement des deux demi-moules à la fermeture et à l'ouverture est commandé mécaniquement, à l'aide d'un galet, solidaire des demi-moules par des moyens de transmission, qui coopèrent avec une came disposée latéralement et présentant un profil requis. Fréquemment il s'agit d'un ensemble de plusieurs moules montés sur un support commun tournant, appelé carrousel, et la came est montée fixe latéralement.

Par contre, lorsque, comme cela se présente dans la majorité des cas, le fond présente une conformation complexe, par exemple lorsque le fond a une forme pétaloïde ou une forme bombée concave, le récipient ne peut pas être extrait, sans déformation et donc sans endommagement, d'un moule en deux parties. C'est la raison pour laquelle on a recours, pour la fabrication de tels récipients munis d'un fond de forme complexe, à des moules en trois parties, comprenant deux demi-moules mobiles l'un par rapport à l'autre pour le moulage du corps du récipient et un fond de moule déplaçable axialement pour le moulage du fond du récipient.

De façon classique alors, l'actionnement du fond de moule est dévolu à un système à came associé au fond de moule qui est équipé d'un galet coopérant avec une came distincte de la came commandant le déplacement des demi-moules.

De plus, pour renforcer mécaniquement le moule lorsqu'il est soumis à la pression de soufflage, on a prévu une solidarisation mécanique des deux demi-moules et du fond de moule dans la position fermée du moule. A cet effet, la partie inférieure des deux demi-moules et la partie supérieure du fond de moule sont à recouvrement mutuel et sont équipées de moyens mutuellement emboîtables, tels que par exemple une nervure annulaire périphérique qui s'engage dans une gorge annulaire complémentaire.

Il en résulte que le déplacement axial du fond de moule ne peut avoir lieu que lorsque les deux demi-moules sont dans une position suffisamment entrouverte pour laquelle les moyens mutuellement emboîtés sont dégagés. Il est donc nécessaire que les déplacements des demi-moules et du fond de moule aient lieu selon une séquence bien précise.

Ces exigences entraînent la nécessité d'un positionnement relatif rigoureux des deux cames commandant respectivement les mouvements des demi-moules et du fond de moule, avec la mise en oeuvre de moyens de réglage pour assurer la précision requise de ce positionnement relatif.

En particulier, il est nécessaire que la position haute du fond de moule soit déterminée précisément, de manière à éviter que les demi-moules viennent percuter les bords du fond de moule lors de leur fermeture.

Actuellement, dans les machines de la Demanderesse, le fond de moule est monté coulissant sur une glissière verticale qui est solidaire de la console de support. Le fond de moule est sollicité en position basse par gravité, en étant guidé au moins dans ses phases de montée et de descente en fonctionnement normal par un mécanisme à came et galet ; par ailleurs, des ressorts amortisseurs peuvent être interposés entre la console et le fond de moule afin de limiter les chocs mécaniques dus aux vibrations lorsque le fond de moule est en en position basse.

Plus précisément, le fond de moule comporte un galet qui coopère alternativement avec une surface de came de montée et une surface de came de descente, lesquels galet et surfaces de came constituant ledit mécanisme à came et galet. Pour permettre les opérations de maintenance, la came n'est pas continue sur le pourtour du carrousel constitutif de la machine, mais est présente seulement dans le secteur angulaire de la machine où il est important que le mouvement du fond de moule soit contrôlé lorsque la machine est en fonctionnement normal, c'est-à-dire le secteur angulaire correspondant aux zones d'ouverture et de fermeture du moule pour les opérations de déchargement d'un récipient et de chargement d'une préforme.

Cette solution, bien qu'ayant donné satisfaction, présente toutefois certains inconvénients, notamment à l'occasion d'opérations de maintenance lors desquelles les fonds de moule se positionnent naturellement en position basse dès lors que les moules sont ouverts manuellement dans le secteur angulaire où la came est absente, même si la mise en position basse s'avère inutile, ce qui nécessite toute une procédure manuelle, donc fastidieuse, de remise en position fermée de chacun des moules, procédure qui nécessite la remontée manuelle de chaque fond de moule, son maintien manuel en position haute jusqu'à ce que les demi-moules associés soient refermés, empêchant alors le fond de moule de redescendre.

L'invention vise notamment à remédier à ces inconvénients en proposant une solution simple, efficace, et économique.

Dans ce but, l'invention propose une machine de soufflage du type décrit précédemment, selon la revendication 1 comporte au moins un organe de rappel qui sollicite le fond de moule vers sa position haute, et en ce que le système à came comporte un élément suiveur de came qui est lié en coulissement au fond de moule et qui coopère avec une surface de commande fixe par rapport au support et orientée vers le bas, de manière que le système à came entraîne le fond de moule vers sa position.

Selon d'autres caractéristiques de l'invention :
- l'organe de rappel est un ressort à boudin de compression ;
- le fond de moule est fixé sur un coulisseau qui est monté coulissant dans une glissière fixée sur la console ;
- le fond de moule est fixé sur un coulisseau constitué par un arbre cannelé qui est monté coulissant dans une douille fixée sur la console ;
- l'élément suiveur de came est fixé sur le coulisseau ;
- la surface de commande comporte un premier tronçon qui commande le coulissement du fond de moule vers la position basse et un second tronçon qui commande le coulissement du fond de moule vers la position haute ;
- la surface de commande s'étend sur un secteur angulaire de la trajectoire circulaire de la console, de sorte que la trajectoire de la console comporte un secteur angulaire principal au cours duquel l'élément suiveur de came n'est pas en contact avec la surface de commande et un secteur angulaire secondaire au cours duquel l'élément suiveur de came vient en contact avec la surface de commande.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective qui représente schématiquement une machine de soufflage équipée d'une unité de moulage réalisée conformément aux enseignements de l'invention ;
- la figure 2 est une vue en perspective qui représente partiellement et schématiquement le coulisseau équipant l'unité de moulage selon l'invention ;

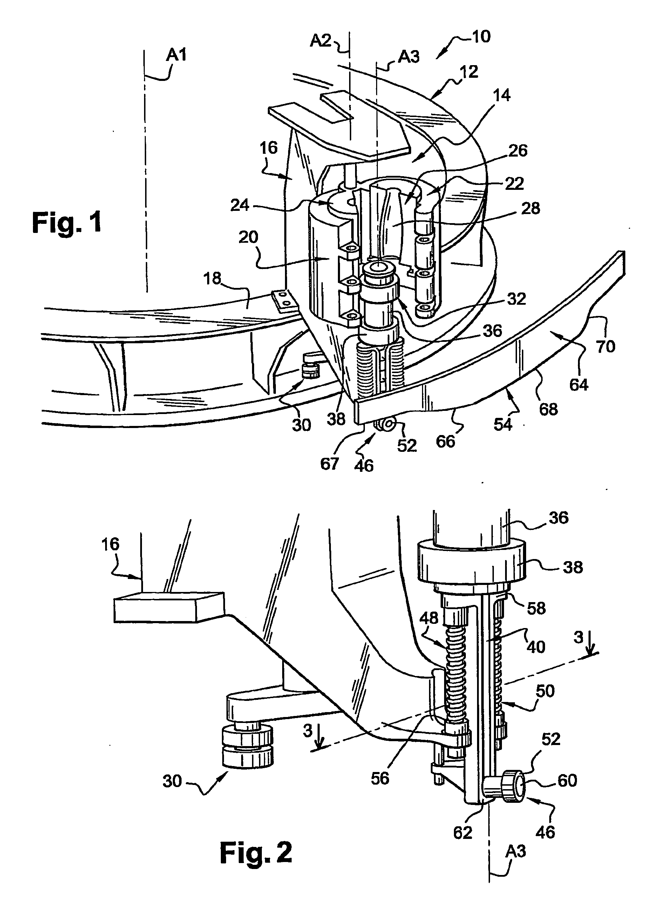

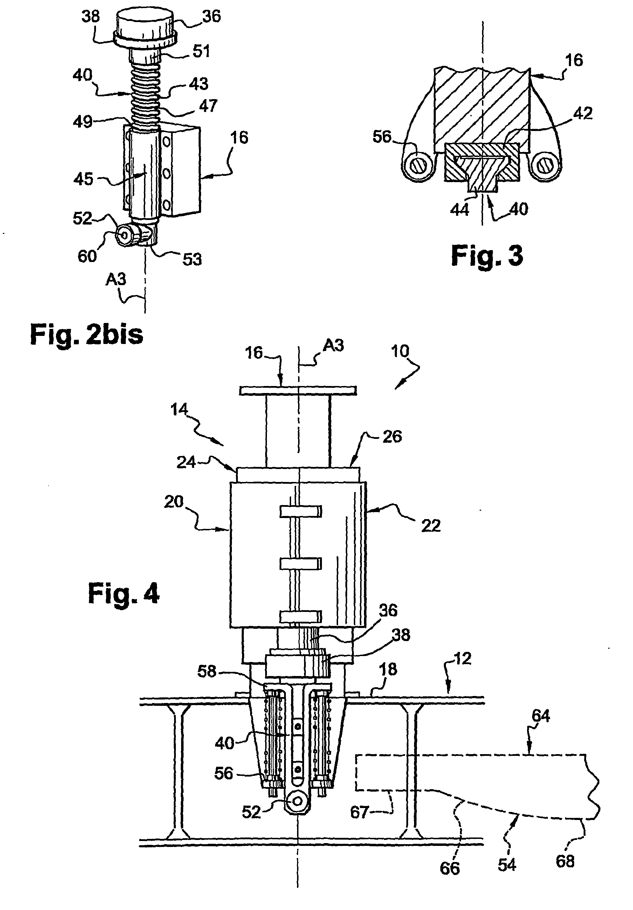

- la figure 2bis est une vue similaire à celle de la figure 2 qui représente une variante de réalisation du coulisseau ;
- la figure 3 est une vue selon le plan de coupe 3-3 qui représente schématiquement le coulisseau de la figure 2 ;
- la figure 4 est une vue de face qui représente schématiquement l'unité de moulage en position de moulage ;

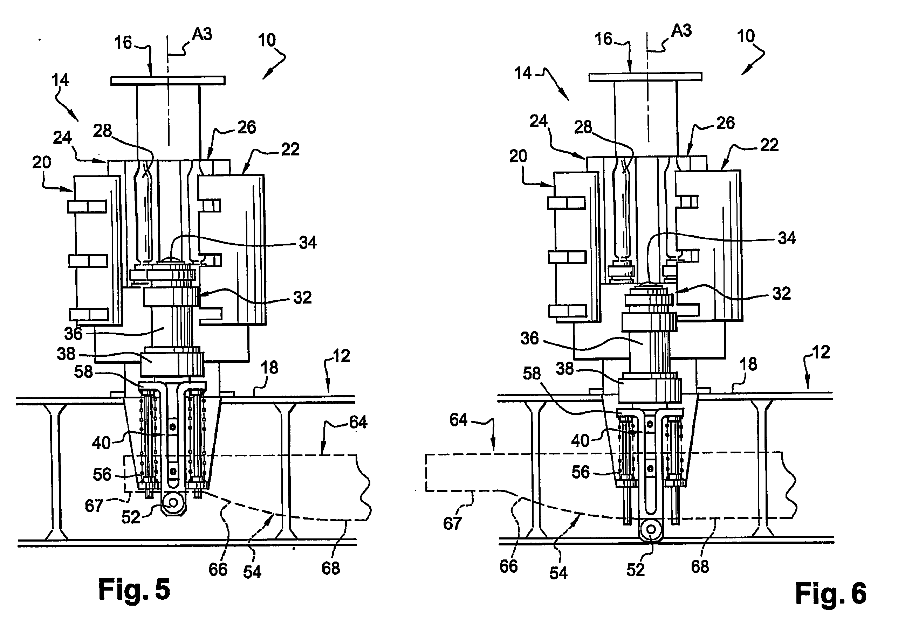

- la figure 5 est une vue similaire à celle de la figure 4 qui représente schématiquement l'unité de moulage lorsque les demi-moules sont ouverts et que le fond de moule occupe sa position haute ;
- la figure 6 est une vue similaire à celle de la figure 4 qui représente schématiquement l'unité de moulage lorsque les demi-moules sont ouverts et que le fond de moule occupe sa position basse.

Dans la description qui va suivre, des éléments identiques, similaires ou analogues seront désignés par les mêmes chiffres de référence.

Sur la figure 1, on a représenté une machine 10 de soufflage pour la fabrication de récipients à partir de préformes en matériau thermoplastique par soufflage ou étirage-soufflage.

La machine 10 de soufflage comporte un plateau 12 tournant formant support, de forme globalement circulaire, qui est monté à rotation autour d'un axe sensiblement vertical A1 et qui est prévu pour supporter une série d'unités de moulage 14 réparties circonférentiellement de manière régulière sur le pourtour du plateau 12.

Dans la suite de la description, par souci de compréhension, des éléments seront qualifiés d'interne ou d'externe, en fonction de leur position radiale par rapport à l'axe de rotation A1 du plateau 12.

De façon similaire, des éléments seront qualifiés de radial ou transversal lorsqu'ils s'étendent dans un plan globalement transversal à l'axe de rotation A1.

Pour simplifier la représentation, une seule unité de moulage 14 est représentée sur la figure 1.

Selon le mode de réalisation représenté ici, chaque unité de moulage 14 comporte une console 16 de support qui est fixée sur une face radiale supérieure 18 du plateau 12.

Chaque unité de moulage 14 constitue un moule de soufflage ou d'étirage-soufflage du type portefeuilles utilisable notamment pour la fabrication de récipients en matière plastique tels que des bouteilles, flacons ou analogues.

L'unité de moulage 14 comporte deux demi-moules 20, 22 qui sont montés mobiles l'un par rapport à l'autre entre une position fermée apte au moulage, qui est représentée sur la figure 4, et une position ouverte apte au démoulage et au chargement d'une préforme, qui est représentée sur la figure 6.

Les demi-moules 20, 22 sont ici montés à pivotement sur la console 16 autour d'un même axe A2 sensiblement parallèle à l'axe de rotation A1 du plateau 12.

Chaque demi-moule 20, 22 porte ici une demi-coquille 24, 26 comprenant une empreinte 28 qui est destinée à former par moulage une moitié du corps du récipient.

De manière connue, le pivotement des demi-moules 20, 22 est entraîné par un système à came et galets dont on a représenté uniquement des galets 30 suiveurs de came, la surface de commande du système à came associé n'étant pas représentée.

La console 16 supporte aussi un fond 32 de moule comprenant dans sa face d'extrémité axiale supérieure une empreinte 34, ici de forme convexe, destinée à former par moulage le fond du récipient.

Le fond 32 de moule est monté à coulissement par rapport à la console 16, suivant une direction de coulissement A3 sensiblement parallèle à l'axe de rotation A1 du plateau 12.

Le fond 32 de moule est fixé ici sur l'extrémité axiale supérieure d'une entretoise 36 qui est intercalée, suivant la direction de coulissement A3, entre la face transversale inférieure du fond 32 de moule et la face transversale supérieure d'une platine 38 en forme de cylindre vertical.

La platine 38 est rapportée sur l'extrémité axiale supérieure d'un coulisseau 40.

Comme on peut le voir sur les figures 2 et 3, le coulisseau 40 comporte une glissière 42 en forme de rail qui s'étend suivant la direction de coulissement A3 et qui est montée coulissante dans une glissière 44 complémentaire fixée sur la console 16.

L'unité de moulage 14 est équipée d'un système 46 à came qui est prévu pour entraîner en coulissement le fond 32 de moule par rapport à la console 16 entre une position haute apte au moulage, qui est représentée sur les figures 1, 4 et 5, et une position basse apte au démoulage et au chargement d'une préforme, qui est représentée sur la figure 6.

Le fond 32 de moule est prévu pour être emboîté dans les demi-moules 20, 22 lorsqu'il occupe sa position haute et que les demi-moules 20, 22 occupent leur position fermée. Cette position dite de moulage est représentée sur la figure 4.

On note que les figures 1 et 5 illustrent une phase de fonctionnement intermédiaire au cours de laquelle les demi-moules sont ouverts, pour permettre le démoulage, alors que le fond de moule occupe encore sa position haute, qui ne permet pas le démoulage. Cette phase de fonctionnement intermédiaire précède immédiatement la phase au cours de laquelle le fond de moule descend vers sa position basse pour permettre le démoulage.

Selon une première caractéristique de l'invention, ledit au moins un organe de rappel est supporté par la console.

Selon une seconde caractéristique de l'invention, le système 46 à came qui entraîne le fond 32 de moule comporte un élément suiveur de came 52 qui est lié en coulissement au fond 32 de moule et qui coopère avec une surface de commande 54 fixe par rapport au plateau 12 et orientée vers le bas, de manière que le système 46 à came entraîne le fond 32 de moule vers sa position basse, à l'encontre de l'effort exercé par l'organe de rappel 48, 50.

Selon le mode de réalisation représenté ici, la console 16 comporte deux ressorts 48, 50 à boudin de compression qui forment les organes de rappel du fond 32 de moule vers sa position haute.

Chaque ressort 48, 50 est interposé axialement (A3) entre une surface radiale d'appui 56, qui est orientée vers le haut et qui est aménagée dans la console 16, et une coupelle d'appui 58 en vis-à-vis qui est aménagée sur le coulisseau 40.

L'élément suiveur de came est ici constitué par un galet 52 qui est monté libre à rotation autour d'un arbre 60 qui s'étend radialement vers l'extérieur, par rapport à l'axe de rotation A1 du plateau 12. L'arbre 60 est fixé sur une portion d'extrémité inférieure 62 du coulisseau 40.

Selon une variante de réalisation qui est représentée sur la figure 2bis, le coulisseau 40 est constitué par un arbre cannelé 43 qui est monté à coulissement suivant l'axe A3 dans une douille 45 à billes fixée sur la console 16.

La console 16 comporte un ressort 47 de rappel unique, coaxial à l'arbre cannelé 43, qui est interposé axialement (A3) entre une surface radiale d'appui 49, agencée à l'extrémité axiale supérieure de la douille 45, et une coupelle d'appui 51 en vis-à-vis qui est aménagé ici à l'extrémité axiale supérieure de l'arbre cannelé 43.

L'arbre 60 portant le galet 52 est agencé ici à l'extrémité axiale inférieure 53 de l'arbre cannelé 43, du côté de l'extrémité axiale inférieure de la douille 45.

Cette variante de réalisation présente l'avantage de simplifier la structure du coulisseau 40 et la structure de la console 16 en minimisant le nombre de pièces nécessaires, ce qui permet de diminuer les coûts et la masse totale de la machine 10 de soufflage.

La surface de commande 54 du système 46 à came a ici la forme d'une piste de roulement aménagée sur le bord d'extrémité axiale inférieure d'une plaque axiale fixe 64. La plaque axiale fixe 64 comporte, dans un plan radial, un profil en arc de cercle centré globalement sur l'axe de rotation A1 du plateau 12, de manière à suivre la trajectoire de la console 16, lorsque le plateau 12 est entraîné en rotation.

La surface de commande 54 est orientée vers le bas, et elle comporte un premier tronçon 66 incliné qui est prévu pour entraîner le fond 32 de moule depuis sa position haute jusqu'à sa position basse, un tronçon intermédiaire 68 sensiblement plan, qui est prévu pour maintenir le fond 32 de moule dans sa position basse, et un second tronçon 70 incliné qui est prévu pour entraîner le fond 32 de moule depuis sa position basse jusqu'à sa position haute.

On note que le second tronçon 70 incliné sert à contrôler l'effort de rappel exercé par les ressorts 48, 50 sur le fond 32 de moule pour permettre une remontée progressive du fond 32 de moule jusqu'à sa position haute.

Avantageusement, la surface de commande 54 s'étend sur un secteur angulaire de la trajectoire circulaire de la console 16, de sorte que la trajectoire de la console 16 comporte un secteur angulaire principal au cours duquel le galet 52 n'est pas en contact avec la surface de commande 54 et un secteur angulaire secondaire au cours duquel la galet 52 vient en contact et coopère avec la surface de commande 54.

De préférence, la position haute du fond 32 de moule est déterminée par une butée axiale (non référencée) réglable en hauteur.

Selon le mode de réalisation représenté ici, la surface de commande 54 comporte un tronçon 67 sensiblement plan qui précède le premier tronçon 66 incliné, suivant la trajectoire de l'unité de moulage 14. Le galet 52 vient donc en contact avec le tronçon 67 plan, le fond 32 de moule occupant sa position haute, avant de circuler sur le premier tronçon 66 incliné qui entraîne le fond 32 de moule vers le bas.

Un avantage de la machine 10 de soufflage selon l'invention est que le réglage de la position haute du fond 32 de moule est facilité, par rapport à une machine selon l'état de la technique, puisque la position haute correspond à une position stable de repos du fond 32 de moule, déterminée par la butée axiale, et le fond 32 de moule est maintenu dans cette position stable de repos par ses ressorts 48, 50.

Ainsi, contrairement à une machine selon l'état de la technique, pour régler la position haute il n'est pas nécessaire de recourir à un outil qui comprime les ressorts 48, 50 de rappel, en vue de maintenir le fond 32 de moule en position haute, les ressorts 48, 50 maintenant ici naturellement le fond 32 de moule dans la position haute.

Pendant la plus grande partie de la trajectoire circulaire de la console 16, le fond 32 de moule occupe sa position haute. Grâce à l'invention, en position haute, le fond 32 de moule n'exerce aucun effort axial sur les demi-moules 20, 22 puisqu'il occupe sa position stable de repos, ce qui minimise l'usure de l'interface d'emboîtement entre le fond 32 de moule et les demi-moules 20,22.

Un autre avantage de la machine de soufflage 10 selon l'invention est que, lors des opérations de maintenance, les fonds de moule restent en position haute lorsque les moules sont ouverts alors que le galet 52 est dans un secteur angulaire où il n'est plus au contact de la surface de commande 54 : il devient dès lors possible de réduire la durée de ces opérations, puisqu'il n'y a plus à procéder à une remise systématique en position des fonds de moules associés à des moules qui auraient été ouverts dans ce secteur angulaire ; par ailleurs, il devient possible de faire descendre seulement ceux, parmi les fonds de moules, qui nécessitent d'être abaissés, lesquels remontent automatiquement dès qu'ils sont relâchés, ce qui favorise considérablement les opérations de maintenance.

## Revendications

1. Machine (10) de soufflage pour la fabrication de récipients à partir de préformes en matériau thermoplastique par soufflage ou étirage-soufflage, comportant au moins un plateau (12) qui est monté à rotation autour d'un axe (A1) sensiblement vertical et qui porte au moins une console (16), du type dans lequel la console (16) supporte deux demi-moules (20, 22) qui sont prévus pour former le corps du récipient et un fond (32) de moule qui est prévu pour former le fond du récipient, du type dans lequel les deux demi-moules (20, 22) sont montés mobiles l'un par rapport à l'autre entre une position fermée apte au moulage et une position ouverte apte au démoulage et au chargement d'une préforme, du type dans lequel le fond (32) de moule est entraîné en coulissement par rapport à la console (16), suivant une direction de coulissement (A3) sensiblement parallèle à l'axe de rotation (A1), par un système (46) à came, entre une position haute apte au moulage et une position basse apte au démoulage, et du type dans lequel le fond (32) de moule est prévu pour être emboîté dans les demi-moules (20, 22) lorsqu'il occupe sa position haute et que les demi-moules (20, 22) occupent leur position fermée, et du type dans lequel un organe de rappel (48, 50) sollicite le fond (32) de moule vers sa position haute
**caractérisée en ce que** ledit au moins un organe de rappel (48, 50) est supporté par la console (16), et **en ce que** le système (46) à came comporte un élément suiveur de came (52) qui est lié en coulissement au fond (32) de moule et qui coopère avec une surface de commande (54) fixe par rapport au plateau (12) et orientée vers le bas, de manière que le système (46) à came entraîne le fond (32) de moule vers sa position basse, à l'encontre de l'effort exercé par l'organe de rappel (48, 50).

2. Machine (10) de soufflage selon la revendication précédente, **caractérisée en ce que** l'organe de rappel (48, 50) est un ressort à boudin de compression.

3. Machine (10) de soufflage selon l'une quelconque des revendications précédentes, **caractérisée en ce que** le fond (32) de moule est fixé sur un coulisseau (40) qui est monté coulissant dans une glissière (42) fixée sur la console (16).

4. Machine (10) de soufflage selon la revendication 1 ou 2, **caractérisée en ce que** le fond (32) de moule est fixé sur un coulisseau (40) constitué par un arbre cannelé (43) qui est monté coulissant dans une douille (45) fixée sur la console (16).

5. Machine (10) de soufflage selon la revendication 3 ou 4, **caractérisée en ce que** l'élément suiveur de came (52) est fixé sur le coulisseau (40).

6. Machine (10) de soufflage selon l'une quelconque des revendications précédentes, **caractérisée en ce que** la surface de commande (54) comporte un premier tronçon (66) qui commande le coulissement du fond (32) de moule vers la position basse et un second tronçon (70) qui commande le coulissement du fond (32) de moule vers la position haute.

7. Machine (10) de soufflage selon l'une quelconque des revendications précédentes, **caractérisée en ce que** la surface de commande (54) s'étend sur un secteur angulaire de la trajectoire circulaire de la console (16), de sorte que la trajectoire de la console (16) comporte un secteur angulaire principal au cours duquel l'élément suiveur de came (52) n'est pas en contact avec la surface de commande (54) et un secteur angulaire secondaire au cours duquel l'élément suiveur de came (52) vient en contact avec la surface de commande (54).

## Claims

1. Blow moulding machine (10) for the manufacture of containers based on preforms made of thermoplastic by blow moulding or stretch-blow moulding, comprising at least one turntable (12) that is mounted so as to rotate about a substantially vertical axis (A1) and that supports at least one console (16), of the type in which the console (16) supports two half-moulds (20, 22) that are designed to form the body of the container and a mould base (32) that is designed to form the bottom of the container, of the type in which the two half-moulds (20, 22) are mounted so as to be movable relative to one another between a closed position suitable for moulding and an open position suitable for stripping and loading a preform, of the type in which the mould base (32) is driven so as to slide relative to the console (16), in a sliding direction (A3) substantially parallel to the axis of rotation (A1), by a cam system (46) between a top position suitable for moulding and a bottom position suitable for stripping, and of the type in which the mould base (32) is designed to be nested in the half-moulds (20, 22) when it occupies its top position and when the half-moulds (20, 22) occupy their closed position, and of the type in which a return member (48, 50) forces the mould base (32) towards its top position
**characterized in that** at least one return member (48, 50) is supported by the console (16), and **in that** the cam system (46) comprises a cam follower element (52) that is slidingly connected to the mould base (32) and that interacts with a control surface (54) fixed relative to the turntable (12) and oriented downwards, so that the cam system (46) moves the mould base (32) towards its bottom position, against the force exerted by the return member (48, 50).

2. Blow moulding machine (10) according to the preceding claim, **characterized in that** the return member (48, 50) is a compression coil spring.

3. Blow moulding machine (10) according to either of the preceding claims, **characterized in that** the mould base (32) is attached to a traveller (40) that is mounted so as to slide in a runner (42) attached to the console (16).

4. Blow moulding machine (10) according to Claim 1 or 2, **characterized in that** the mould base (32) is attached to a traveller (40) consisting of a grooved shaft (43) that is mounted so as to slide in a tubular casing (45) attached to the console (16).

5. Blow moulding machine (10) according to Claim 3 or 4, **characterized in that** the cam follower element (52) is attached to the traveller (40).

6. Blow moulding machine (10) according to any one of the preceding claims, **characterized in that** the control surface (54) comprises a first section (66) that controls the sliding of the mould base (32) to the bottom position and a second section (70) that controls the sliding of the mould base (32) to the top position.

7. Blow moulding machine (10) according to any one of the preceding claims, **characterized in that** the control surface (54) extends over an angular sector of the circular trajectory of the console (16), so that the trajectory of the console (16) comprises a main angular sector during which the cam follower element (52) is not in contact with the control surface (54) and a secondary angular sector during which the cam follower element (52) comes into contact with the control surface (54).

## Patentansprüche

1. Blasformmaschine (10) zur Herstellung von Behältern aus Vorformlingen aus thermoplastischem Material durch Blasen oder Streckblasen mit mindestens einer Platte (12), die drehend um eine im wesentlichen vertikale Achse (A1) montiert ist, und die mindestens eine Konsole (16) besitzt, welche zwei Formhälften (20, 22) aufnimmt, die den Hauptteil des Behälters bilden sollen, und eine Formbasis (32), die den Boden des Behälters bilden soll, wobei die beiden Formhälften (20, 22) zwischen einer zum Formen geeigneten, geschlossenen Position, und einer zum Entformen und Einbringen einer Vorform geeigneten, offenen Position beweglich zueinander montiert sind, wobei die Formbasis gegenüber der Konsole (16) gleitend angetrieben wird, und zwar entlang einer Gleitrichtung (A3) im wesentlichen parallel zur Drehachse (A1) durch ein Nockensystem (46) zwischen einer oberen Position zum Formen und einer unteren Position zum Entformen, wobei die Formbasis (32) in die Formhälften (20, 22) eingesteckt wird, wenn sie ihre obere Position einnimmt und die Formhälften (20, 22) ihre geschlossene Position einnehmen, wobei ein Rückholelement (48, 50) die Formbasis (32) nach oben vorbelastet,
**dadurch gekennzeichnet, dass** das mindestens eine Rückholelement (48, 50) durch die Konsole (16) gehalten wird, und dass das Nockensystem (46) ein Nockennachführelement (52) besitzt, das gleitend mit der Formbasis (32) verbunden ist und mit einer gegenüber der Platte (12) feststehenden und nach unten gerichteten Steuerfläche (54) zusammenwirkt, so dass das Nockensystem (46) die Formbasis (32) in Richtung ihrer unteren Position antreibt und zwar entgegen der Kraft, die von dem Rückholelement (48, 50) ausgeübt wird.

2. Blasformmaschine (10) nach dem vorhergehenden Anspruch, **dadurch gekennzeichnet, dass** es sich bei dem Rückholelement (48, 50) um eine Spiraldruckfeder handelt.

3. Blasformmaschine (10) nach einem der vorhergehenden Ansprüche, **dadurch gekennzeichnet, dass** die Formbasis (32) an einem Gleitstück (40) befestigt ist, das verschiebbar in einer Führungsschiene (42) montiert ist, welche an der Konsole (16) befestigt wurde.

4. Blasformmaschine (10) nach Anspruch 1 oder 2, **dadurch gekennzeichnet, dass** die Formbasis (32) an einem Gleitstück (40) befestigt ist, das aus einer geriffelten Welle (43) besteht, welche verschiebbar in einer Buchse (45) montiert ist, die an der Konsole (16) befestigt wurde.

5. Blasformmaschine (10) nach Anspruch 3 oder 4, **dadurch gekennzeichnet, dass** das Nockennachführelement (52) an dem Gleitstück (40) befestigt ist.

6. Blasformmaschine (10) nach einem der vorhergehenden Ansprüche, **dadurch gekennzeichnet, dass** die Steuerfläche (54) einen ersten Abschnitt (66) aufweist, der die Verschiebung der Formbasis (32) in die untere Position steuert, und einen zweiten Abschnitt (70), der die Verschiebung der Formbasis (32) in die obere Position steuert.

7. Blasformmaschine (10) nach einem der vorhergehenden Ansprüche, **dadurch gekennzeichnet, dass** sich die Steuerfläche (54) auf einen winkelförmigen Kreisausschnitt der kreisförmigen Bahn der Konsole (16) erstreckt, so dass die Bahn der Konsole (16) einen winkelförmigen Hauptkreisausschnitt besitzt, im Verlaufe dessen das Nockennachführelement (52) nicht mit der Steuerfläche (54) in Berührung steht, und einen sekundären winkelförmigen Kreisausschnitt, im Verlaufe dessen das Nockennachführelement (52) mit der Steuerfläche (54) in Berührung kommt.
